Europäisches Patentamt

**European Patent Office**    (11) Veröffentlichungsnummer: **0 104 605**

**Office européen des brevets**    **B1**

(12)    # EUROPÄISCHE PATENTSCHRIFT

(45) Veröffentlichungstag der Patentschrift:    (51) Int. Cl.⁴: **H 04 L 11/00**
18.05.88

(21) Anmeldenummer: **83109414.9**

(22) Anmeldetag: **21.09.83**

(54) **Verfahren zum Identifizieren einer rufenden Teilnehmerstelle anhand ihrer Anschlusskennung in einer Durchgangsvermittlungsstelle einer Fernschreib- und Datenvermittlungsanlage.**

(30) Priorität: **24.09.82 DE 3235500**

(43) Veröffentlichungstag der Anmeldung:
**04.04.84 Patentblatt 84/14**

(45) Bekanntmachung des Hinweises auf die Patenterteilung:
**18.05.88 Patentblatt 88/20**

(84) Benannte Vertragsstaaten:
**AT CH DE IT LI SE**

(56) Entgegenhaltungen:
**EP-A-0 067 760**
**EP-A-0 104 606**
**BE-A-645 785**
**US-A-3 595 986**

**NATIONAL TELECOMMUNICATIONS CONFERENCE, Band 3, 29.-30. November - 1. Dezember 1976, Dallas, Texas, Seiten 47.1-1 - 47.1-5, IEEE, New York, US; H. UCHIYAMA et al.: "Call processing and circuit maintenance in the CT-10 electronic telex switching system"**

(73) Patentinhaber: **Siemens Aktiengesellschaft Berlin und München, Wittelsbacherplatz 2, D-8000 München 2 (DE)**

(72) Erfinder: **Franz, Dietmar, Ing. grad., Edelweissstrasse 66, D-8039 Puchheim (DE)**
Erfinder: **Torggler, Norbert, Dipl.- Ing., Bellinzonastrasse 7, D-8000 München 71 (DE)**

## Beschreibung

Die Erfindung bezieht sich auf ein Verfahren zum Identifizieren einer an einer Ursprungsvermittlungsstelle einer wenigstens die Ursprungsvermittlungsstelle, wenigstens eine Durchgangsvermittlungsstelle und wenigstens eine Zielvermittlungsstelle umfassenden Fernschreib- und Datenvermittlungsanlage angeschlossenen rufenden Teilnehmerstelle anhand ihrer Anschlußkennung zwecks Berechnung von Gebühren betreffend Verbindungen, die von dieser Teilnehmerstelle aus über eine Durchgangsvermittlungsstelle laufen, wobei eine solche Verbindung dadurch aufgebaut wird, daß zunächst von der Ursprungsvermittlungsstelle zu der Zielvermittlungsstelle eine Wahlinformation übertragen wird, woraufhin von der Zielvermittlungsstelle aus zu der Ursprungsvermittlungsstelle hin vor Abgabe eines die Durchschaltung bzw. Belegung der Zielvermittlungsstelle anzeigenden Durchschaltesignals ein die Durchschaltung der Durchgangsvermittlungsstelle bewirkendes erstes Steuersignal abgegeben wird, welche eine Anzeige dafür liefert, daß für den betreffenden Verbindungsaufbau noch weitere Steuersignale in der Zielvermittlungsstelle bereitstehen, und/oder welches die Abgabe der Anschlußkennung der an der Ursprungsvermittlungsstelle angeschlossenen rufenden Teilnehmerstelle von dieser Ursprungsvermittlungsstelle für eine an der Zielermittlungsstelle angeschlossene gerufene Teilnehmerstelle anfordert, und daß mit Hilfe des von der Zielvermittlungsstelle aus abgegebenen Durchschaltesignals die Verbindung über die Ursprungsvermittlungsstelle zu der rufenden Teilnehmerstelle hin durchgeschaltet und mit Hilfe eines aus dem betreffenden Durchschaltesignal abgeleiteten, zu der Zielvermittlungsstelle hin übertragenen Signals der gerufenen Teilnehmerstelle der Aufbau der Verbindung angezeigt wird.

Eine vergleichbare Anmeldung ist die EP-A-0 014 606 mit gleichen Anmeldetag (21-9-83) und gleicher Priorität (24-09-82).

Ein Verfahren zum Verbindungsaufbau, von dem bei der vorliegenden Erfindung ausgegangen wird, ist bereits in Datennetzen nach der CCITT-Empfehlung X.70 bzw. X.71 realisierbar, in denen Verbindungen von einer Ursprungsvermittlungsstelle aus über mindestens eine Durchgangsvermittlungsstelle zu einer Zielvermittlungsstelle hin aufzubauen sind. Bei solchen Verbindungen erfolgt die Berechnung von Gebühren üblicherweise in der Ursprungsvermittlungsstelle.

Es ist weiterhin bekannt, bei in Fernschreibnetzen über eine Durchgangsvermittlungsstelle verlaufenden Verbindungen im Zuge des jeweiligen Verbindungsaufbaues von der Durchgangsvermittlungsstelle her den Kennungsgeber des jeweils rufenden Fernschreibgerätes zum Zwecke der Gebührenerfassung abzufragen. Eine solche Vorgehensweise ist im allgemeinen, insbesondere aber in Datennetzen, nicht möglich, da beispielsweise bei den in Datennetzen für einen Verbindungsaufbau abzuwickelnden Signalisierungsprozeduren ein Austausch bzw. ein Abfragen von Kennungsgebern nicht vorgesehen ist. Eine Abfrage des Kennungsgebers einer rufenden Teilnehmerstelle, falls ein solcher in dieser überhaupt vorgesehen ist, könnte hier allenfalls in der Datenübertragungsphase erfolgen. Dies bringt aber erhebliche Probleme mit sich, da hierzu die in der Datenübertragungsphase übertragenen Datensignale in der Durchgangsvermittlungsstelle mitgelesen werden müßten. Ein solches Mitlesen wird insbesondere dann technisch aufwendig sein, wenn innerhalb eines solchen Datennetzes für die Übertragung von Datensignalen beliebige, lediglich zwischen den an einer Verbindung beteiligten Teilnehmerstellen abzustimmende Übertragungsprozeduren vorgesehen sind. Die Abfrage von Kennungsgebern zum Zwecke der Gebührenerfassung bringt dabei weiterhin den Nachteil mit sich, daß es sich bei diesen Kennungsgebern um Teilnehmereinrichtungen handelt, die der Kontrolle durch den Betreiber des jeweiligen Netzes nicht unterstehen.

Der vorliegenden Erfindung liegt nun die Aufgabe zugrunde, einen Weg zu zeigen, wie auf relativ einfache Weise bei einem Verfahren der eingangs genannten Art die an Endvermittlungsstellen angeschlossenen Teilnehmerstellen anhand ihrer Anschlußkennungen identifiziert werden können.

Gelöst wird die vorstehend aufgezeigte Aufgabe bei einem Verfahren der eingangs genannten Art erfindungsgemäß dadurch, daß das erste Steuersignal in dem Fall, daß mit ihm lediglich die Bereitstellung weiterer Steuersignale angezeigt wird, in der Durchgangsvermittlungsstelle derart modifiziert wird, daß die betreffende Anschlußkennung von der Ursprungsvermittlungsstelle, an der die betreffende rufende Teilnehmerstelle angeschlossen ist, der Durchgangs vermittlungsstelle zur Verfügung gestellt wird, welche diese Anschlußkennung wie die auf die Übertragung eines die Abgabe der Anschlußkennung fordernden Steuersignals bereitgestellte Anschlußkennung gegebenenfalls mit der zuvor aufgenommenen, die gerufene Teilnehmerstelle betreffenden Wahlinformation für die Gebührenermittlung bereitstellt. Die Erfindung bringt den Vorteil mit sich, daß für die Identifizierung einer rufenden Teilnehmerstelle in der Durchgangsvermittlungsstelle einer Fernschreib- und Datenvermittlungsanlage im Zuge des Verbindungsaufbaues lediglich ein geringer Steuerungsaufwand erforderlich ist.

Im folgenden wird die Erfindung anhand von Zeichnungen beispielsweise näher beschrieben.

Fig. 1 zeigt in einem Blockschaltbild eine Schaltungsanordnung, bei der die Erfindung angewandt ist,

Fig. 2 zeigt ein Diagramm, auf das im Zuge der Erläuterung der Erfindung eingegangen wird.

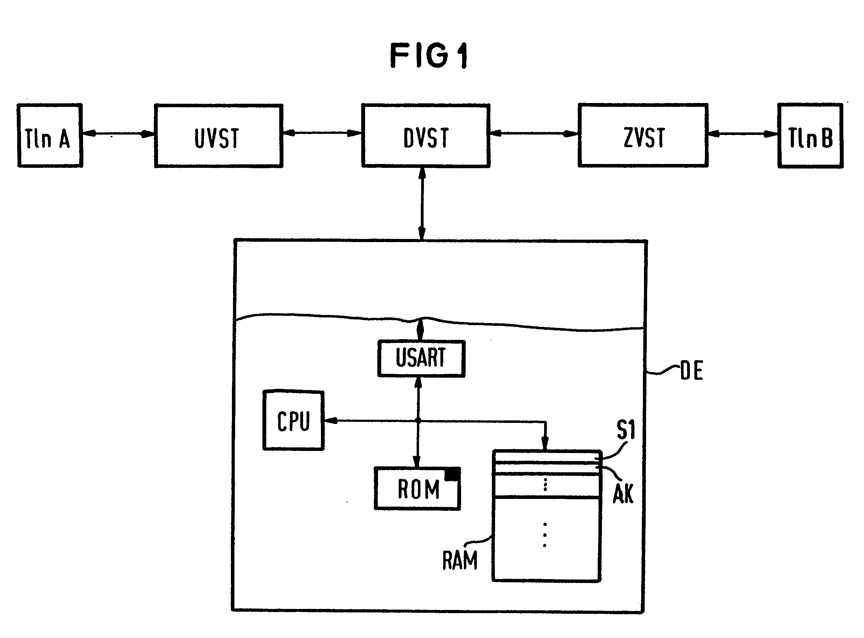

In Fig. 1 ist eine Fernschreib- und Datenvermittlungsanlage dargestellt, die eine Ursprungsvermittlungsstelle UVST, eine Durchgangsvermittlungsstelle DVST und eine Zielvermittlungsstelle ZVST aufweist. An die Ursprungsvermittlungsstelle ist eine Teilnehmerstelle TlnA angeschlossen, von der aus, wie im folgenden noch näher dargestellt werden wird, eine Verbindung zu der an der Zielvermittlungsstelle angeschlossenen Teilnehmerstelle TlnB aufgebaut werden möge. Bei diesen Teilnehmerstellen kann es sich beispielsweise um Bürofernschreibeinrichtungen handeln, die auch als Teletex-Endgeräte bezeichnet werden. In Fig. 1 ist an die Ursprungsvermittlungsstelle und an die Zielvermittlungsstelle lediglich jeweils eine Teilnehmerstelle angeschlossen. Im allgemeinen weisen jedoch derartige Vermittlungsstellen eine Mehrzahl solcher Teilnehmerstellen auf. Die gerade genannten Vermittlungsstellen stehen auch im allgemeinen mit der Durchgangsvermittlungsstelle über eine Mehrzahl von Verbindungsleitungen in Verbindung. Von diesen Verbindungsleitungen ist in Fig. 1 lediglich eine dargestellt. Außerdem kann die Ziel vermittlungsstelle auch die Funktion einer Ursprungsvermittlungsstelle übernehmen, wenn beispielsweise eine Verbindung von der Teilnehmerstelle TlnB zu der Teilnehmerstelle TlnA aufzubauen ist. In diesem Fall würde dann die hier als Ursprungsvermittlungsstelle bezeichnete Vermittlungsstelle die Funktion einer Zielvermittltingsstelle übernehmen. Da es sich bei den Teilnehmerstellen um Teletex-Endgeräte handeln möge, erfolgt die Signalübertragung von bzw. zu den Teilnehmerstellen und auf den die Vermittlungsstellen verbindenden Verbindungsleitungen nach einem synchronen Übertragungsverfahren, beispielsweise auf den Teilnehmerleitungen gemäß der CCITT-Empfehlung X.21 und auf den Verbindungsleitungen gemäß der CCITT-Empfehlung X.71.

Mit der Durchgangsvermittlungsstelle DVST ist eine Datenverwaltungseinrichtung DE verbunden, in der für eine spätere Gebührenermittlung die für die über die Durchgangsvermittlungsstelle verlaufenden Verbindungen relevanten Daten, wie z. B. die Anschlußkennung der jeweils rufenden Teilnehmerstelle, die Wahlinformation der gerufenen Teilnehmerstelle, der Zeitpunkt der Durchschaltung der Verbindung und der Zeitpunkt des Auslösens der Verbindung, gespeichert werden. Die Datenverwaltungseinrichtung DE steht über eine Sende-/Empfangsschaltung USART mit der zugehörigen Durchschaltevermittlungsstelle in Verbindung. Diese Sende-/Empfangsschaltung setzt einerseits die ihr von der Durchgangsvermittlungsstelle her in serieller Form zugeführten Signale in eine parallele Form und die an die Durchgangsvermittlungsstelle abzugebenden, ihr zunächst in paralleler Form zugeführten Signale in eine serielle Form um. Die Sende-/Empfangsschaltung ist außerdem über eine Busleitungsanordnung mit einem Mikroprozessor CPU verbunden. An die Busleitungsanordnung sind außerdem ein als Programmspeicher dienender Festwertspeicher ROM und ein Datenspeicher RAM mit wahlfreiem Zugriff angeschlossen. Der Datenspeicher RAM weist eine Mehrzahl von Speicherbereichen auf, in die von dem Mikroprozessor CPU her die für eine Gebührenermittlung relevanten Verbindungsdaten der über die Durchgangsvermittlungsstelle verlaufenden Verbindungen einschreibbar sind.

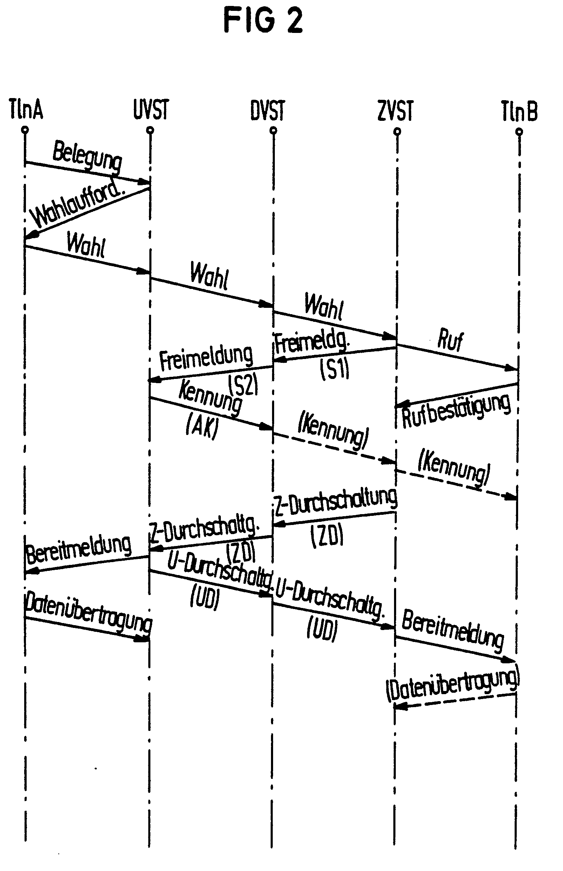

Nunmehr sei das Verfahren gemäß der Erfindung unter Bezugnahme auf die in Fig. 1 dargestellte Schaltungsanordnung und unter Heranziehung des Diagramms gemäß Fig. 2 näher erläutert. Für eine von der Teilnehmerstelle TlnA zu der Teilnehmerstelle TlnB hin aufzubauende Verbindung wird von der Teilnehmerstelle TlnA ein Belegungssignal ("Belegung" in Fig. 2) abgegeben. Aufgrund dieses Belegungssignals sendet die Urpsrungsvermittlungsstelle UVST ein Wahlaufforderungssignal ("Wahlaufforderung" in Fig. 2) in Rückwärtsrichtung zu der Teilnehmerstelle TlnA, die auf die Aufnahme dieses Signals hin eine Wahlinformation, hier die der Teilnehmerstelle TlnB zugehörigen Wahlziffern, an die Ursprungsvermittlungsstelle UVST abgibt. Die Wahlinformation wird dann von dieser über die Durchgangsvermittlungsstelle DVST an die Zielvermittlungsstelle ZVST weitergeleitet ("Wahl" in Fig. 2). Von der Durchgangsvermittlungsstelle her wird außerdem ein Signal zu dem Mikroprozessor CPU der Datenverwaltungseinrichtung DE ( Fig. 1) hin übertragen, welches in der Datenverwaltungseinrichtung die Belegung eines bereits erwähnten Speicherbereiches des Datenspeichers RAM bewirkt. In diesem Speicherbereich werden die Wahlinformation und, wie im folgenden noch näher erläutert werden wird, die für die gerade aufzubauende Verbindung relevanten Daten im Zuge des Verbindungsaufbaues abgespeichert.

Die Zielvermittlungsstelle ZVST ermittelt anhand der ihr gerade zugeführten Wahlinformation die gerufene Teilnehmerstelle, hier die Teilnehmerstelle TlnB, und leitet an diese ein Rufsignal weiter ("Ruf"in Fig. 2). Von der Zielvermittlungsstelle her wird außerdem zu der Durchgangsvermittlungsstelle DVST hin eine Freimeldung (S1 in Fig. 2) übertragen, die die Durchschaltung der Durchgangsvermittlungsstelle bewirkt. Diese Freimeldung, mit der beispielsweise angezeigt werden kann, daß die Anschlußkennung der rufenden Teilnehmerstelle angefordert wird bzw. daß in der Folge von der Zielvermittlungsstelle weitere Steuersignale, wie z. B. die Anschlußkennung der gerufenen Teilnehmerstelle, übertragen werden, wird nun zunächst zu dem Mikroprozessor CPU der Datenverwaltungseinrichtung DE hin übertragen. Der Mikroprozessor CPU speichert diese Freimeldung in dem für die hier aufzubauende Verbindung reservierten Speicherbereich ab und gibt an die zugehörige Durchgangsvermittlungsstelle DVST anstelle dieser eine gegebenenfalls modifizierte Freimeldung (S2 in Fig. 2) ab, mit der die Anschlußkennung der rufenden Teilnehmerstelle TlnA von der Ursprungsvermittlungsstelle UVST angefordert wird. Diese modifizierte Freimeldung wird dann von der Durchgangsvermittlungsstelle zu der Ursprungsvermittlungsstelle UVST hin übertragen, die aufgrund dieser Freimeldung die mit dieser angeforderte Anschlußkennung ("Kennung AK" in Fig. 2) abgibt.

Die Durchgangsvermittlungsstelle DVST übergibt dem Mikroprozessor CPU der Datenverwaltungseinrichtung DE die ihr gerade zugeführte Anschlußkennung, der diese in den reservierten Speicherbereich des Datenspeichers RAM überträgt. Außerdem überprüft er anhand der zuvor in diesem Speicherbereich zwischengespeicherten, ursprünglich von der Zielvermittlungsstelle her abgegebenen Freimeldung, ob die gerade empfangene Anschlußkennung von der Zielvermittlungsstelle her angefordert wird. Ist dies der Fall (unterbrochene Verbindungslinie in Fig. 2), so wird die weiterhin im Datenspeicher RAM verbleibende Anschlußkennung zusätzlich zu der Durchgangsvermittlungsstelle DVST übertragen, die diese dann für eine Übergabe an die gerufene Teilnehmerstelle TlnB an die Zielvermittlungsstelle ZVST weiterleitet. Anderenfalls wird von dem Mikroprozessor CPU ein gesondertes Steuersignal abgegeben, welches dann ebenfalls an die Zielvermittlungsstelle weitergeleitet wird.

Auf das Eintreffen der gerade erwähnten Anschlußkennung bzw. des erwähnten gesonderten Steuersignals hin überträgt die Zielvermittlungsstelle ZVST die gegebenenfalls zu übertragenden Steuersignale, wie z. B. Anschlußkennung der gerufenen Teilnehmerstelle TlnB, zu der Durchgangs vermittlungsstelle, die diese dann an die Ursprungsvermittlungsstelle UVST abgibt (in Fig. 2 nicht dargestellt).

Nach Abgabe der gegebenenfalls zu der Ursprungsvermittlungsstelle hin zu übertragenen Steuersignale wird, falls bereits ein das erwähnte, an die gerufene Teilnehmerstelle TlnB abgegebene Rufsignal quittierendes Rufbestätigungssignal ("Rufbestätigung" in Fig. 2) von der Teilnehmerstelle TlnB abgegeben worden ist, die Durchschaltung in der Zielvermittlungsstelle ZVST vorgenommen und ein entsprechendes Durchschaltesignal ("Z-Durchschaltung ZD" in Fig. 2) über die Durchgangsvermittlungsstelle zu der Ursprungsvermittlungsstelle UVST hin übertragen. Dieses Durchschaltesignal bewirkt dann in der Ursprungsvermittlungsstelle die Durchschaltung zu der rufenden Teilnehmerstelle hin. Der Durchschaltezustand wird dabei der rufenden Teilnehmerstelle TlnA durch ein entsprechendes Signal angezeigt ("Bereitmeldung" in Fig. 2). Außerdem wird aus diesem Durchschaltesignal ein den Durchschaltezustand der Ursprungsvermittlungsstelle anzeigendes Signal (U-Durchschaltung UD in Fig. 2) abgeleitet und an die zugehörige Zielvermittlungsstelle abgegeben. Aufgrund dieses Signals erhält dann die gerufene Teilnehmerstelle TlnB ein Signal in Form einer Bereitmeldung. Damit ist die Verbindung zu der gerufenen Teilnehmerstelle vollständig aufgebaut. Es schließt sich nun die Datenübertragung gegebenenfalls in beiden Übertragungseinrichtungen an.

Der Zeitpunkt der Durchschaltung der Durchgangsvermittlungsstelle DVST wird ebenfalls in den bereits erwähnten Speicherbereich des der Datenverwaltungseinrichtung DE zugehörigen Datenspeichers RAM übernommen. Die in dem Speicherbereich im Zuge des Verbindungsaufbaues zwischengespeicherten Daten verbleiben hier bis zum Abbau der Verbindung. Der Zeitpunkt des Abbaues wird dabei im übrigen ebenfalls zwischengespeichert. Nach dem Verbindungsabbau werden sämtliche für diese Verbindung zwischengespeicherten Daten zu der Durchgangsvermittlungsstelle DVST hin für eine Berechnung der angefallenen Gebühren übertragen. Diese Berechnung kann dann beispielsweise in der Durchgangsvermittlungsstelle selbst oder in einer gesonderten Nachverarbeitungseinrichtung erfolgen.

Bei dem vorstehend erläuterten Ausführungsbeispiel sind an die Ursprungsvermittlungsstelle und an die Zielvermittlungsstelle jeweils Teletex-Endgeräte angeschlossen, d.h. daß die Vermittlungsstellen zu ein und demselben Datennetz gehören. Es ist jedoch auch möglich, daß die genannten Vermittlungsstellen zu unterschiedlichen Netzen gehören, wie z. B. zu Fernschreibnetzen und Datennetzen. In diesem Fall stellt die in Fig. 1 dargestellte Durchgangsvermittlungsstelle eine Vermittlungsstelle dar, die einen Netzübergang zwischen den betreffenden Netzen ermöglicht.

**Patentansprüche**

Verfahren zum Identifizieren einer an einer Ursprungsvermittlungsstelle (UVST) einer wenigstens die Ursprungsvermittlungsstelle, wenigstens eine Durchgangsvermittlungsstelle (DVST) und wenigstens eine Zielvermittlungsstelle (ZVST) umfassenden Fernschreib- und Datenvermittlungsanlage angeschlossenen rufenden Teilnehmerstelle

(TlnA) anhand ihrer Anschlußkennung zwecks Berechnung von Gebühren betreffend Verbindungen, die von dieser Teilnehmerstelle aus über eine Durchgangsvermittlungsstelle verlauft, wobei eine solche Verbindung dadurch aufgebaut wird, daß zunächst von der Ursprungsvermittlungsstelle zu der Zielvermittlungsstelle eine Wahlinformation übertragen wird, woraufhin von der Zielvermittlungsstelle aus zu der Ursprungsvermittlungsstelle hin vor Abgabe eines die Durchschaltung bzw. Belegung der Zielvermittlungsstelle anzeigenden Durchschaltesignals (ZD) ein die Durchschaltung der Durchgangsvermittlungsstelle bewirkendes erstes Steuersignal (S1) abgegeben wird, welches eine Anzeige dafür liefert, daß für den betreffenden Verbindungsaufbau noch weitere Steuersignale in der Zielvermittlungsstelle bereitstehen, und/oder welches die Abgabe der Anschlußkennung der an der Ursprungsvermittlungsstelle angeschlossenen rufenden Teilnehmerstelle von dieser Ursprungsvermittlungsstelle für eine an der Zielvermittlungsstelle angeschlossene gerufene Teilnehmerstelle anfordert, und daß mit Hilfe des von der Zielvermittlungsstelle aus abgegebenen Durchschaltesignals die Verbindung über die Ursprungsvermittlungsstelle zu der rufenden Teilnehmerstelle hin durchgeschaltet und mit Hilfe eines aus dem betreffenden Durchschaltesignal abgeleiteten, zu der Zielvermittlungsstelle hin übertragenen Signals (UD) der gerufenen Teilnehmerstelle (TlnB) der Aufbau der Verbindung angezeigt wird, dadurch gekennzeichnet, daß das erste Steuersignal (S1) in dem Fall, daß mit ihm lediglich die Bereitstellung weiterer Steuersignale angezeigt wird, in der Durchgangsvermittlungsstelle (DVST) derart modifiziert wird, daß die betreffende Anschlußkennung von der Ursprungsvermittlungsstelle (UVST), an der die betreffende rufende Teilnehmerstelle (TlnA) angeschlossen ist, der Durchgangsvermittlungsstelle zur Verfügung gestellt wird, welche diese Anschlußkennung wie die auf die Übertragung eines die Abgabe der Anschlußkennung fordernden Steuersignals bereitgestellte Anschlußkennung gegebenenfalls mit der zuvor aufgenommenen, die gerufene Teilnehmerstelle (TlnB) betreffenden Wahlinformation für die Gebührenermittlung bereitstellt.

## Claim

1. A method of identifying, on the basis of its calling line identification, a calling subscriber station (TlnA) connected to an originating exchange (UVST) of a teleprinter- and data switching system which comprises at least the originating exchange, at least one transit exchange (DVST) and at least one terminating exchange (ZVST) in order to calculate charges relating to connections from this subscriber station via a transit exchange, where such a connection is established in that firstly a selection information is transmitted from the originating exchange to the terminating exchange whereupon, prior to the emission of a switch-through signal (ZD) which indicates the switch-through or seizure of the terminating exchange, the terminating exchange supplies the originating exchange with a first control signal (S1) which switches through the transit exchange and which indicates that further control signals are available in the terminating exchange for the respective connection establishment, and/or which requests the emission of the calling line identification of the calling subscriber station connected to the originating exchange from this originating exchange for a called subscriber station connected to the terminating exchange, and that by means of the switch-through signal emitted from the terminating exchange the connection is switched through via the originating exchange to the calling subscriber station, and by means of a signal (UD) which is derived from the respective switch-through signal and is transmitted to the terminating exchange the establishment of the connection is indicated to the called subscriber station (TlnB), characterised in that in the event that the first control signal (S1) only indicates the availability of further control signals it is modified in the transit exchange (DVST) in such manner that the respective calling line identification is made available to the transit exchange by the originating exchange (UVST) to which the respective calling suscriber staion (TlnA) is connected, by which this calling line identification, in the same way as the calling line identification which was made available as a result of the transmission of a control signal requesting the emission of the calling line identification, where appropriate together with the previously received selection information relating to the called subscriber station (TlnB), is made available for charge metering.

## Revendication

Procédé pour identifier un poste d'abonné appelant (TlnA), raccordé à un central d'origine (UVST) d'une installation de téléimpression et de commutation de données comportant au moins le central d'origine, au moins un central de transit (DVST) et au moins un central de destination (ZVST), sur la base de l'indicatif d'appel de cet abonné, pour le calcul de taxes concernant des communications qui sont établies à partir de ce poste d'abonné par l'intermédiaire d'un central de transit et selon lequel une telle communication est établie grâce au fait qu'une information de sélection est d'abord transmise depuis le central d'origine au central de destination, à la suite de quoi le central de destination envoie en direction du central d'origine, avant la délivrance d'un signal d'interconnexion (ZD) indiquant l'interconnexion ou l'occupation du central de destination, un premier signal de commande (S1) qui déclenche l'interconnexion du central de transit et fournit une indication du fait que, pour l'établissement de la liaison considérée, d'autres signaux de commande sont prêts dans le central de destination, et/ou qui demande la délivrance de l'indicatif d'appel du poste d'abonné appelant, raccordé au central d'origine, par ce central pour un poste d'abonné appelé raccordé au central de destination, et qu'à l'de du signal d'interconnexion délivré à partir du central de destination, la liaison est établie avec le poste d'abonné appelant par l'intermédiaire du central d'origine et l'établissement de la liaison est indiqué au poste d'abonné appelé (TlnB) à l'aide d'un signal (UD) dérivé du signal d'interconnexion considéré et envoyé au central de destination, caractérisé par le fait que, dans le cas où seule la préparation d'autres signaux de commande est indiquée par le premier signal de commande (S1), ce signal est modifié dans le central de transit (DVST) de telle sorte que le central d'origine (UVST), auquel le poste d'abonné appelant considéré (TlnA) est raccordé, met l'indicatif d'appel considéré à la disposition du central de transit qui prépare cet indicatif d'appel ainsi que l'indicatif d'appel préparé lors de la transmission d'un signal de commande demandant la délivrance de l'indicatif d'appel, avec éventuellement l'information de sélection reçue antérieurement et concernant le poste d'abonné appelé (TlnB), pour la détermination des taxes.

# FIG 1

Tln A ⟷ UVST ⟷ DVST ⟷ ZVST ⟷ Tln B

USART

DE

CPU

S1

AK

ROM

RAM

0 104 605

# FIG 2